# EUROPÄISCHE PATENTSCHRIFT

(11) **EP 1 200 514 B1**
(45) Veröffentlichungstag und Bekanntmachung des Hinweises auf die Patenterteilung: **01.10.2003**
(21) Anmeldenummer: 99945970.4
(22) Anmeldetag: 06.08.1999
(51) Int. Cl.: C08J 11/08, B29B 17/02

(54) **THERMISCHES TRENNVERFAHREN FÜR VERMISCHTE POLYMERE**
THERMAL SEPARATION METHOD FOR MIXED POLYMERS
PROCEDE DE SEPARATION THERMIQUE POUR POLYMERES MELANGES

(43) Veröffentlichungstag der Anmeldung: 02.05.2002
(73) Patentinhaber: Der Grüne Punkt-Duales System Deutschland Aktiengesellschaft, 51145 Köln (DE)
(72) Erfinder: ARLT, Wolfgang, D-16540 Hohen Neuendorf (DE); SADOWSKI, Gabriele, D-15366 Hönow (DE); BEHME, Stefan, D-10961 Berlin (DE); BUNGERT, Bernd, D-65719 Hofheim (DE)
(74) Vertreter: Tönhardt, Marion, Dr.
(86) Internationale Anmeldenummer: EP9905809
(87) Internationale Veröffentlichungsnummer: WO01010943

(56) Entgegenhaltungen:
- EP-A- 0 894 818
- DE-A- 2 639 864
- DE-A- 2 801 522
- DE-A- 19 714 063
- DE-A- 19 806 355
- US-A- 4 196 105
- PATENT ABSTRACTS OF JAPAN vol. 1995, no. 01, 28. Februar 1995 (1995-02-28) & JP 06 298992 A (SEKITEI BEIKOKU:KK), 25. Oktober 1994 (1994-10-25)

## Beschreibung

Die Erfindung betrifft ein Verfahren zur Trennung von technischen und biologischen Polymeren durch Flüssig-Flüssig Entmischung und anschließende Flüssig-Chromatographie.

Die Trennung von Polymeren kann bedeuten:
1. die Trennung verschiedener Molekülargewichte einer Spezies von Polymeren
2. die Trennung verschiedener Spezies von Polymeren (z.B. Polystyrol und Polyester) ungeachtet ihrer Molekulargewichte

Polymere, hier technische Polymere, sind Großprodukte der chemischen Industrie mit einer Herstellungsmenge von ca. 6.4 Mill. to in 1990. Der weitaus größte Teil der hergestellten Polymere sind Thermoplaste, d.h., Polymere endlichen Molekulargewichts. Die Thermoplaste machen ca. 90% der hergestellten Menge aus und unterteilen sich selbst in ca. 11 verschiedene chemische Spezies wie z.B. Polyvinylchlorid, Polystyrol, Polyolefine, Polyester, Copolymere etc.. Eine Verwertung hängt davon ab, ob die verschiedenen Spezies, die als Abfall vermischt auftreten, in die Reinsubstanzen trennbar sind. da vermischte Polymere in der Regel kein hochwertiges Produkt ergeben. Die Wiederverwertung läßt sich nach folgenden Verfahren durchführen:
- thermische Verwertung, d.h.. Verbrennung des gemischten Abfalls zur Gewinnung der Verbrennungswärme. Dieses Verfahren wandelt die Polymere im wesentlichen in die für weitere Synthesen nutzlosen Stoffe CO₂ und H₂O um.
- sortenreine Rückgewinnung. Diese Form der Wiedergewinnung ist in der Regel auf Verarbeiter beschränkt, da verkaufte Polymere in der Regel vermischt auftreten.
- mechanische. Trennung. Diese Verfahren nutzen die unterschiedliche Dichte oder das unterschiedliche Benetzungsverhalten der Polymere aus. Sie sind nicht auf Hohlkörper oder mechanisch verbundene Teile verschiedener Polymere oder auf mit Zusatzstoffen (Weichmacher. Flammschutzmittel u.ä.) versehene Polymere anwendbar.
- mechanische Trennung durch Erkennung der Spezies. Diese Verfahren beruhen auf schnellen Analysenmethoden, die die Spezies der Polymere erkennen und die erkannten Teile sortieren. Diese Verfahren sind nicht auf mechanisch verbundene Teile verschiedener Polymere anwendbar.

Ein Nachteil allgemeiner Art aller aufgeführten Trennverfahren ist die Tatsache, daß diese nicht auf die oft vorhandenen Zusatz- und Hilfsstoffe sowie auf (z.B. durch UV-Bestrahlung) abgebaute Polymere reagieren können.

Auch thermische Trennverfahren kommen zur Polymertrennung in Betracht. Aufgrund des sehr niedrigen Dampfdrucks von Polymeren scheidet die Destillation aus, so daß auf extraktive und adsorptive Verfahren ausgewichen werden muß.

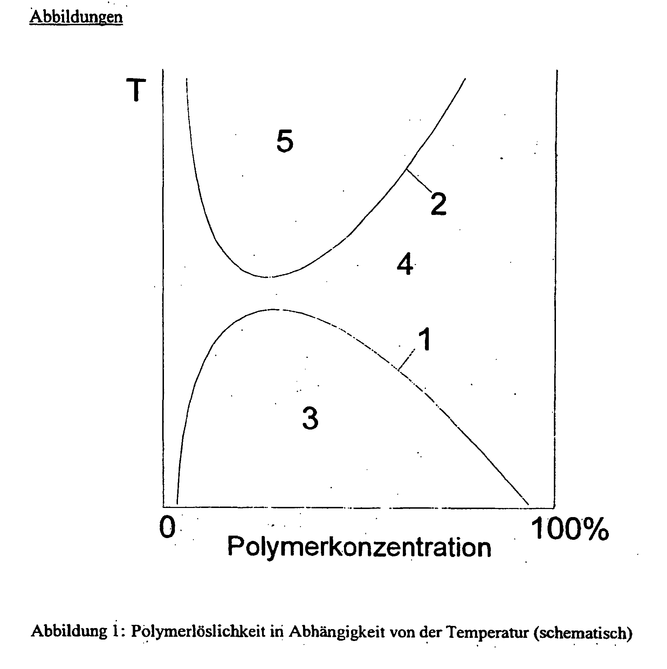

Betrachtet man die Löslichkeit eines Polymers in einem Lösungsmittel, so ist diese sowohl stark von der Temperatur als auch von der Molmasse des Polymers abhängig. Abbildung 1 verdeutlicht diesen prinzipiellen Zusammenhang.

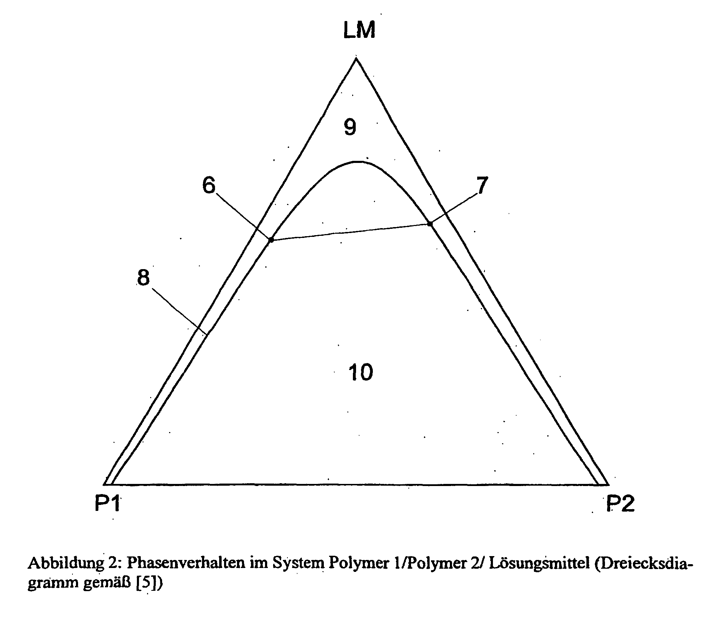

Der Polymergehall in einer Lösung (0 bis 100%) ist gegenüber der Temperatur aufgetragen. Die eingezeichneten Zweiphasen-Grenzlinien 1 und 2 trennen das Gebiet vollständiger Mischbarkeit (4) von den Gebieten der Entmischung (3 bzw. 5) in zwei flüssige Phasen, von denen jeweils eine reich an Lösungsmittel und die andere reich an Polymer ist. Man erkennt. daß in der Regel zwei Entmischungsgebiete, eines bei niedrigeren Temperaturen (3) und eines bei höheren Temperaturen (5), existieren. Eine Erhöhung der Polymer-Molmasse führt zu einer Ausdehnung der Zweiphasen-Entmischung, im Extremfall zur Ausbildung eines einzigen, zusammenhängenden Zweiphasengebietes (Uhrglas-Diagramm).
Für technische Trennaufgaben ist insbesondere die Entmischung bei höheren Temperaturen interessant, da bei niedrigen Temperaturen und hohen Polymergehalten (> 20 Ma% Polymer) die Viskosität der Lösungen sehr hoch ist, was zu einem erschwenen Stoff- und Wärmetransport und damit zu erhöhten Kosten (Hochviskos-Technik) führt. Das Zweiphasengebiet 5 kann durch Einkomprimieren eines Gases zu niedrigeren Temperaturen hin verschoben werden [1], was besonders für thermisch instabile Polymere von Bedeutung ist. Auf die Weise können die Vorteile geringer Viskosität mit denen einer geringen Temperaturbeanspruchung verknüpft werden. Ein weiterer Vorteil der Anwendung eines komprimierten Gases besteht darin, daß es sich im Gegensatz zu flüssigen Fällungsmitteln (durch die ebenfalls eine Entmischung hervorgerufen werden könnte) durch Druckabsenkung wieder quasi quantitativ aus dem System entfernen läßt und so zusätzliche Aufbereitungsschritte. wie z.B. die Destillation, entfallen.
Betrachtet man zwei Polymere in einem gemeinsamen Lösungsmittel, kommt es in der Regel ebenfalls zu einer Entmischung in zwei flüssige Phasen, sobald der Gesamtpolymer-Gehalt einen Wert von 5-10 Ma% erreicht, selbst dann, wenn jedes der beiden reinen Polymere im betrachteten Lösungsmittel vollständig löslich ist (z.B. [2]). Abbildung 2 verdeutlicht diesen Zusammenhang anhand eines Dreiecksdiagramms.

Während die Eckpunkte des Dreiecks die reinen Stoffe Polymer P1. Polymer P2 und das Lösungsmittel LM repräsentieren, stehen die Dreicksseiten für die jeweiligen binären Untersysteme. Alle denkbaren Konzentrationen des ternären Systems Polymer P1/Polymer P2/Lösungsmittel LM befinden sich innerhälb der Dreiecksfläche. Linie 8 trennt das Gebiet vollständiger Mischbarkeit (9) vom Gebiet der Entmischung in zwei flüssige Phasen (10). In Gebiet 10 bilden sich zwei Phasen aus, die jeweils überwiegend eines der Polymere und zusätzlich merkliche Mengen des jeweils anderen Polymers enthalten. Eine Polymerentrennung durch Ausnutzung dieser Entmischung mit hohen Reinheiten der Polymere (>99%) ist theoretisch denkbar, wenn man bei Gesamtpolymergehalten von 30-50Ma% arbeitet. Sie ist jedoch praktisch nicht durchführbar, da hierbei zwei (oder mehrere) Phasen mit jeweils hohem Polymergehalt anfallen, die so viskos sind, daß eine mechanische Trennung der Phasen nicht gelingt.
Nauman [3] beschreibt ein Verfahren zur selektiven Auflösung einer Polymermischung mittels gesondert ausgesuchter Lösungsmittel. Die Nachteile dieses Verfahrens sind hohe Lösungsmittelverbräuche. geringe Selektivitäten und hohe Empfindlichkeit des Verfahrens in Bezug auf die Molmasse des Polymers. Hinzu kommt. daß wegen der sehr hohen Viskositäten in der Lösung das Herauslösen und Abtrennen der Polymere wiederum nur unvollständig gelingt. Von Nauman selbst wird angegeben, daß das Verfahren für Verbundmaterialien aus verschiedenen Polymeren versagt [3].
Ein weiteres thermisches Trennverfahren ist die Flüssigchromatographie, die so geführt werden kann, daß eine Trennung der Polymere ungeachtet ihrer Molmasse erfolgt [4]. Die Trennung einer Spezies wird hierbei durch eine Verteilung zwischen einer mobilen und einer stationären Phase hervorgerufen. Eine solche chromatographische Anlage besteht aus folgenden Teilen: Maschine zur Aufrechterhaltung des Flusses der mobilen Phase: Zugabevorrichtung für die zu trennenden Substanzen; Säule mit der stationären Phase; Detektor für die zu trennenden Spezies. Die beschriebene Anlagenkonfiguration wird für analytische Zwecke und in gewissem Rahmen auch für technische Trennungen eingesetzt. Dabei müssen Säulenmaterial. Lösungs- und Elutionsmittel so gewählt werden. daß die Retentionszeiten aller Spezies endlich sind. d.h., daß keine der Spezies irreversibel auf der Säule haftet [4]. Beschränkungen dieses Verfahrens liegen darin, daß wegen der geringen gleichzeitigen Löslichkeit mehrerer Polymere im gemeinsamen Lösungsmittel bei gleichzeitig hohen Viskositäten mit sehr verdünnten Lösungen gearbeitet werden muß. was dessen Wirtschaftlichkeit beeinträchtigt.

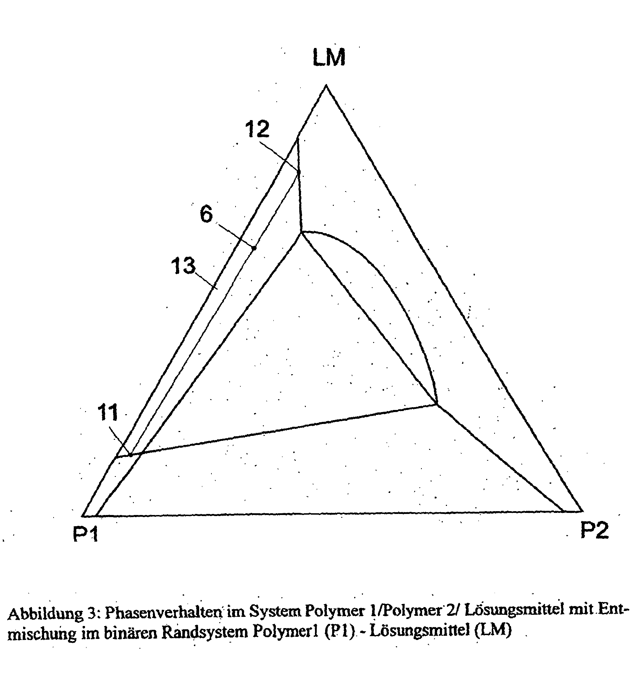

Das erfindungsgemäße Verfahren stellt zu den Literaturverfahren eine wesentliche Verbesserung durch eine zweistufige flüssige Phasentrennung dar, wobei höchstens eine der auftretenden Phasen von hoher Viskosität ist. Die Grundlagen des Verfahrens werden aus Gründen der Übersichtlichkeit im folgenden für zwei Polymere erläutert, sind aber prinzipiell auch auf mehrere Polymere anwendbar.
In einem ersten Schritt werden die Polymere P1 und P2 mit einem Gesamtpolymergehalt von 1-50Ma%, bevorzugt 5-20Ma% in einem geeigneten Lösungsmittel aufgelöst. Durch Wahl der Bedingungen Druck und Temperatur, in einer Variante des Verfahrens auch durch Zugabe eines Gases, wird eine Entmischung gemäß Abbildung 2 hervorgerufen. Dabei entstehen zwei flüssige Phasen (Punkte 6 und 7 in Abbildung 2), die aufgrund des geringen Gesamtpolymergehaltes in der Lösung lösungsmittel-reich und damit beide niedrigviskos sind. In jeder der Phasen 6 bzw. 7 ist jeweils ein Polymer angereichert (Polymer P1 in Phase 6; Polymer P2 in Phase 7), das andere liegt in geringer Konzentration vor. Die beiden Phasen 6 und 7 werden getrennt und beide Fraktionen separat dem zweiten Schritt unterworfen.
Im zweiten Schritt des erfindungsgemäßen Verfahrens, hier dargestellt für Fraktion 6, wird durch weitere Änderung von Temperatur und Druck, in einer Variante des Verfahrens auch durch Zugabe eines Gases, eine erneute Phasentrennung gemäß Abbildung 3 hervorgerufen.

Durch Phasentrennung im binären System Polymer P1 - Lösungsmittel (LM) wird auch im ternären System ein Zweiphasengebiet (13) induziert. Dabei entstehen ausgehend von Punkt 6 zwei Phasen (Punkte 11 und 12 in Abbildung 3), von denen eine (11) hochviskos ist und das Polymer P1 in hoher Reinheit zu Polymer P2 enthält, die andere (12) jedoch überwiegend aus dem Lösungsmittel LM sowie den Polymeren P1 und P2 in starker Verdünnung besteht und damit niedrigviskos ist. Dabei ist zu beachten, daß Abbildung 3 aus Gründen der Übersichtlichkeit rein schematisch ist und die erzielbaren Reinheiten an Polymer P1 zu P2 deutlich größer sind als dargestellt. Wegen der geringen Viskosität der Phase 12 ist eine mechanische Trennung beider Phasen problemlos möglich.
In einem dritten Schritt, der insbesondere bei Forderungen nach besonders hoher Reinheit des Polymers P1 Anwendung findet, wird die Phase 11 der Flüssigchromatographie zugeführt. Dabei wird wegen des geringen Gehaltes des störenden Polymers P2 das Verfahren so gestaltet, daß diese Komponente irreversibel auf der Säule verbleibt, während die andere (P1) die Säule passiert.

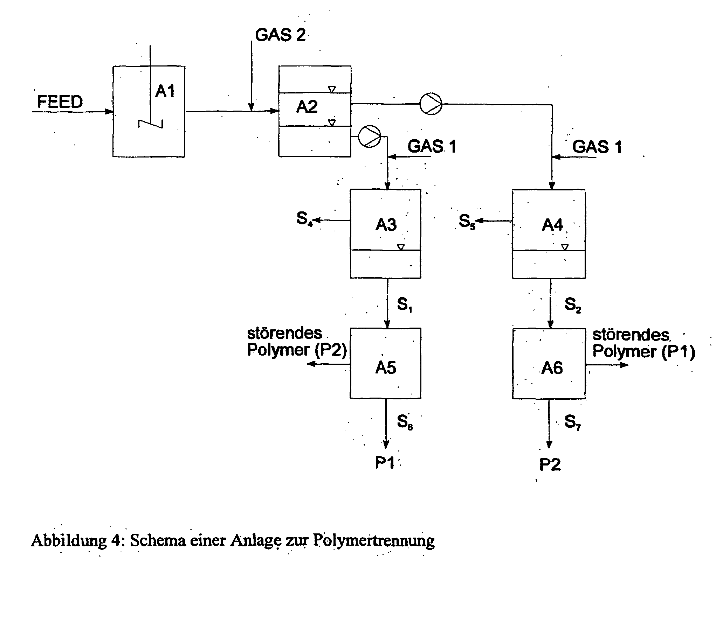

### Apparativ kann das beschriebene Verfahren wie folgt ausgeführt werden (Abbildung 4):

Die zu trennenden Polymere werden in einem Lösungsmittel mit einem Gesamt-Gewichtsanteil von bevorzugt 5-25Ma% gelöst (Apparat A1).
Durch geeignete Bedingungen von Temperatur und Druck oder die Zugabe eines komprimierten Gases oder eine Kombination aller drei Faktoren entstehen zwei (oder mehrere) flüssige Phasen, von denen jede überwiegend eines der Polymere sowie geringe Mengen der anderen Polymere enthält. Aufgrund des relativ geringen Polymergehaltes (5-25Ma%) läßt die Viskosität der Mischung eine Abtrennung der Phasen noch zu (Apparat A2).
Ausgehend von den jeweils homogen vorliegenden Fraktionen wird anschließend durch geeignete Bedingungen von Druck. Temperatur und gegebenfalls durch Gaszugabe eine erneute Phasentrennung induziert, bei der neben einer lösungsmittelreichen, niedrigviskosen Phase eine Phase entsteht, die jeweils ein Polymer in hoher Reinheit (bezogen auf das Lösungsmittel-freie Polymer) enthält (95-99.99Ma%) (Apparate A3 und A4). Die Lösungsmittel-reiche Phase enthält jeweils geringe Mengen des gleichen Polymers, insbesondere den Kurzkettenanteil, sowie Anteile der störenden Polymere. Durch die geeignete Wahl des Gasgehaltes oder der Temperatur wird die Zeit, die benötigt wird, um 99Ma% der Phasen abzusetzen, vorteilhaft gesenkt. Die Lösungsmittel-reiche Phase wird als Teilstrom S₄ bzw. S₅ ausgeschleust. Die hochreinen Polymere werden in Lösung als Produktströme S₁ bzw. S₂ abgezogen und für eine weitere Erhöhung der Reinheit (99-100%) gegebenenfalls der Flüssig-Chromatographie (Apparate A5 und A6) zugeführt. Dabei werden die Bedingungen der Chromatographie jeweils so gewählt, daß die Hauptkomponente, das Polymer P1 bzw. P2, nicht retardiert wird, während das störende Polymer P2 bzw. P1 irreversibel auf der jeweiligen Säule verbleibt. Die Polymere P1 und P2 werden in Lösung als Produktströme S₆ und S₇ erhalten.
Das Lösungsmittel und das Gas können nach Aufreinigung recycliert werden. Dabei ist neben der Einspeisung des Gases in die Apparate A3 und A4 (Gas1) auch eine direkte Einspeisung in den Apparat A2 (Gas2) denkbar. Dadurch würde bereits in diesem Prozeßschritt die Viskosität der Mischung deutlich abgesenkt werden.
Das erfindungsgemäße Verfahren ist auf alle thermoplastischen oder nichtvernetzten Polymere anwendbar. Es kann auch sinngemäß auf biologische Polymere übertragen werden.

Das Lösungsmittel, in dem die zu trennenden Polymere aufgelöst werden, wird so ausgewählt, daß
- es eine ausreichende Löslichkeit der Polymere erreicht wird, um das erfindungsgemäße Verfahren kostengünstig zu gestalten,
- es das anzuwendende Gas bei mäßigen Drücken in ausreichendem Maße löst
- es im Zusammenhang mit dem anzuwendenden Gas zu einer Entmischung bei moderaten Temperaturen führt,
- die Mischung mit Elutionsmitteln der Flüssigchromatographie möglich ist und nicht zur Ausfällung eines oder beider Polymere führt,
- keine starken Wechselwirkungen mit der stationären Phase der Flüssigchromatographie auftreten,
- es aus dem Produktstrom mit konventionellen Methoden, z.B. Eindampfüng oder Fällung kostengünstig entfernt werden kann,
- es die Detektion des zu eluierenden Polymers nicht stört,
- es chemisch im erfindungsgemäßen Verfahren beständig ist und möglichst nicht zur Korrosion führt.

Das einkomprimierte Gas wird so gewählt, daß
- es die zu trennenden Polymere nicht löst,
- es sich bei moderaten Drücken in ausreichendem Maße in der Polymerlösung löst,
- im Zusammenhang mit dem anzuwendenden Lösungsmittel zu einer Entmischung bei moderaten Temperaturen führt,
- es sich durch Druckabsenkung leicht wieder aus dem System entfernen läßt:

Die mobile Phase der Chromatographie wird so ausgewählt, daß
- sie mit der stationären Phase zu dem erfindungsgemäßen Trennschema führt,
- keine Größenausschluß-Effekte begünstigt,
- ein Polymer irreversibel zurückgehalten wird, während das andere eluiert wird,
- sie chemisch im erfindungsgemäßen Verfahren beständig ist und möglichst nicht zur Korrosion führt.

Die stationäre Phase der Chromatographie wird so ausgewählt, daß
- eines der beiden Polymere zurückgehalten wird.
- die Porengröße ausreichend für Wechselwirkungen mit Polymeren ist,
- keine Größenausschluß-Effekte begünstigt,
- auch die gelösten Zusatzstoffe abtrennt.
- verschiedene Korngrößen für technische Trennungen verfügbar sind,
sie mechanisch ausreichend stabil ist.

### Beispiele

Die Anwendbarkeit des erfindungsgemäßen Verfahrens soll an folgenden Beispielen demonstriert werden.

### Beispiel 1:

### Entmischung zweier Polymere im gemeinsamen Lösungsmittel durch Temperaturerhöhung

Eine Lösung aus 50 g Polystyrol, 1 g (LDPE) und 400 g Cyclohexan wird in einem Autoklaven auf eine Temperatur von 235°C erwärmt. Dabei stellt sich ein Druck von 2 bar abs. ein. Die polystyrolreiche Phase enthält ca. 34 Ma% Polymer: die Lösungsmittelphase ca 2 Ma% gemischtes Polymer. Die polymerreiche Phase hat einen Polystyrolgehalt im gemischten lösungsmittelfreien Polymer von > 99,9 Ma%

### Beispiel 2:

### Entmischung zweier Polymere im gemeinsamen Lösungsmittel durch Einkomprimieren eines Gases

Polystyrol und Low Density Polyethylen (LDPE) werden in Cyclohexan bei ca 80°C gelöst. Diese Lösung zerfällt in zwei flüssige Phasen. von denen eine ca. 98Ma% Polystyrol bezogen auf das gemischte Polymer enthält. Diese Phase enthält ca.
50 g Polystyrol, 1 g (LDPE) und 400 g Cyclohexan. Sie wird durch Dekantieren gewonnen und in einen Autoklaven überführt. Durch Lösen von Kohlendioxid bei Drücken oberhalb von 61 bar abs. bei einer Temperatur von 80°C entstehen eine polymerreiche flüssige Phase mit ca. 40 Ma% gemischtem Polymer und eine lösungsmitlelreiche Phase mit ca. 1 Ma% gemischtem Polymer. Die polymerreiche Phase hat einen Polystyrolgehalt im gemischten Polymer von > 99,9 Ma%.

### Beispiel 3:

### Absenken der Absetzzeit zweier flüssiger Phasen durch Einkomprimieren eines Gases

In einer Lösung mit 50 g Polystyrol, 1 g (LDPE) und 400 g Cyclohexan wird Kohlendioxid bei einem Druck von 68 bar gelöst. Es entstehen zwei flüssige Phasen.
Nach dem Anhalten der Mischungseinrichtung erfolgt ein Absetzen der Phasen innerhalb weniger Sekunden. Eine vollständige Klärung ist für die polymerarme Phase nach 7 Minuten und für die polymerreiche Phase nach 13 Minuten zu beobachten. Diese Werte liegen deutlich unter 20 Minuten, die als größter sinnvoller Wert für die großtechnische Anwendbarkeit der Flüssig-Flüssig Phasentrennung allgemein angegeben werden.

### Beispiel 4:

### Chromatographie mit irreversibler Adsorption einer Komponente

Mit einer HPLC wurde folgendes chromatographisches Schema zur Trennung von Polystyrol (PS) mit einer massenmittleren Molmasse von 100 kg/mol und Bisphenol-A Polycarbonat mit einer massenmittleren Molmasse von 17 kg/mol befunden.
Die Trennung wird auf der stationären Phase LiChrospher Si 60 der Korngröße 5 µm bei T=25°C in einer Säule mit dem Durchmesser 4,0 mm und der Länge 250 mm durchgeführt. Das Lösungsmittel ist Dichlormethan, die mobile Phase ist ebenfalls Dichlormethan. Die verwendeten Flüssigkeiten waren von der Qualitätsklässe "HPLC grade".
In die beschriebene Säule wurden. 10µl Probevolumen bei einem Fluß der mobilen Phase von 1 ml/min eingespritzt, das aus dem Lösungsmittel plus 1 mg Polymer/ml Lösungsmittel bestand. Das Polymer besteht aus PS und PC, die aus den reinen Stoffen im Massenverhältnis 1:1 vermischt wurden.
Bei diesem Versuch wurde PC irreversibel absorbiert und PS mit Totzeit eluiert.

### Beispiel 5:

### Auftreten von mindestens zwei flüssigen Phasen

5g Polystyrol, 5g LDPE und 5g PVC werden bei 140°C unter Siedebedingungen in 85g p-Xylol in einem Glaskolben unter Einsatz eines Magnetrührers gelöst. Nach Abstellen des Rührers bilden sich drei flüssge Phasen aus. die jeweils eines der Polymere in angereicherter Form enthalten.

### Beispiel 6:

### Auftreten von mindestens zwei flüssigen Phasen

5g Polystyrol, 5g LDPE, 5g Polypropylen, 5g LLDPE und 5g PVC werden bei 140°C unter Siedebedingungen in 75g p-Xylol in einem Glaskolben unter Einsatz eines Magnetrührers gelöst. Nach Abstellen des Rührers bilden sich drei flüssige Phasen aus, die jeweils Polystyrol, die Polyolefine und PVC in angereicherter Form enthalten.

### Beispiel 7:

### Auftreten von mindestens zwei flüssigen Phasen

5g Polystyrol, 5g HDPE. 5g LDPE und 5g Polypropylen werden bei 150°C in 80g Cyclohexan in einem gerührten Glasautoklaven gelöst. Nach Abstellen des Rührers bilden sich zwei flüssige Phasen aus, die Polystyrol bzw. die Polyolefine in angereicherter Form enthalten.

### Beispiel 8:

### Entmischung zweier Polymere im gemeinsamen Lösungsmittel durch Einkomprimieren eines Gases

Polystyrol und LDPE werden in Cyclohexan bei ca 80,7°C gelöst. Diese Lösung zerfällt in zwei flüssige Phasen, von denen eine ca. 98Ma% Polystyrol bezogen auf das gemischte Polymer enthält. Diese Phase enthält ca. 50g Polystyrol, 1g LDPE und 400g Cyclohexan. Sie wird durch Dekantieren gewonnen und in einen Autoklaven überführt. Durch Lösen von Kohlendioxid bei Drücken öberhalb von 61 bar bei einer Temperatur von 80°C entstehen erneut zwei Phasen: eine polymerreiche flüssige Phase mit ca. 40Ma% Polymer und eine lösungsmittelreiche Phase mit ca. 1 Ma% Polymer. Die polymerreiche Phase hat einen Polystyrolgehalt von > 99.9 Ma%.

### Beispiel 9:

### Absenken der Absetzzeit zweier flüssiger Phasen durch Einkomprimieren eines Gases

Die Absetzzeit aus Beispiel 7 wird mit mehr als eine Stunde gemessen. Wird Kohlendioxid bei einem Druck von 68 bar gelöst, erfolgt eine vollständige Klärung für die polymerarme Phase nach 7 Minuten und für die polymerreiche Phase nach 13 Minuten. Diese Werte liegen deutlich unter 20 Minuten, die als größter sinnvoller Wert für die großtechnische Anwendbarkeit der Flüssig-Flüssig Phasentrennung allgemein angegeben werden.

### Beispiel 10:

### Dekantieren und Abtrennen in erhöhter Reinheit

10g Poly(1-buten) und 10g Polypropylen werden bei 140°C in einem Glasautoklaven bestehend aus Spezialglas der Firma Schott. eingespannt zwischen zwei Edelstahlflanschen und temperiert in einem Laborofen der Firma Heraeus unter Verwendung eines Blattrührers in n-Pentan unter Druck gelöst. Die sich nach Abstellen des Rührers abscheidenden flüssigen Phasen werden durch Dekantieren abgetrennt Sie erhalten jeweils eines der Polymere in angereicherter Form. Die erhaltenen homogenen Lösungen werden in zwei weitere Glasautoklaven des gleichen Typs, installiert in demselben Thermostatofen, überführt. Dort wird für beide Lösungen eine Temperatur von 162,5°C eingestellt, die in beiden Fällen ausreichend ist, um die für das reine Polymer mit dem Lösungsmittel auftetende untere kritische Entmischungstemperatur (LCST) zu überschreiten (siehe zur Erläuterung Abb.1. Einzelheit 2 der Erfindung). Die jeweils auftretende polymerreiche Phase wird unter Verwendung von Kugelhahnventilen vom Typ Whitey Serie TF abgelassen und das Lösungsmittel durch Flash-Verdampfüng abgetrennt. Die so erhaltenen Produkte enthalten jeweils Polypropylen und Poly(1-buten) in erhöhter Reinheit.

### Beispiel 11:

### Dekantieren und Abtrennen in erhöhter Reinheit

In der in Beispiel 10 beschriebenen Apparatur werden 11.5g Polystyrol und 12.1g HDPE in 74,8g Essigsäurepentylester bei 160°C in Lösung gebracht. Nach Abstellen des Rührers werden die beiden auftretenden flüssigen Phasen durch Dekantieren voneinander getrennt. Die mit HDPE angereicherte Phase wird in einen der zuvor beschriebenen weiteren Autoklaven überführt. Durch Absenken der Temperatur auf 129,5°C wird die für das reine HDPE mit dem Lösungsmittel auftretende obere kritische Entmischungstemperatur (UCST) unterschritten (siehe Abb. 1 Einzelheit 1). Es bilden sich zwei flüssige Phasen. Die polymerreiche Phase wird, wie zuvor beschrieben, abgetrennt. Das Produkt enthält HDPE in einer Reinheit von >99 Massenprozent.

### Beispiel 12:

### Dekantieren und Abtrennen in erhöhter Reinheit

11,9g Polystyrol und 11,8g HDPE werden in 81,2g Essigsäurebutylester bei 140°C gelöst. Nach Abschalten des Rühres werden die beiden flüssigen Phasen, wie in Beispiel 11 beschrieben, abgetrennt und in die beiden weiteren Autoklaven überführt. Zunächst wird der Thermostatofen auf 234,6°C erwärmt. In der mit HDPE angereicherten Lösung werden, aufgrund der Überschreitung der für reines HDPE mit Essigsäurebutylester auftretenden LCST. zwei flüssige Phasen beobachtet, während die andere, mit Polystyrol angereicherte, Lösung zunächst homogen bleibt. Die polymerreiche Phase der mit HDPE angereicherten Lösung wird abgetrennt. Darin wird HDPE mit einer Reinheit von >99,5 Massenprozent nachgewiesen. Die mit Polystyrol angereicherte Lösung im dritten Glasautoklaven wird auf eine Temperatur von 246,1 °C aufgeheizt. Die sich daraufhin abscheidende polymerreiche Phase wird wiederum abgezogen. Man erhält Polystyrol mit einer Reinheit von > 99 Massenprozent.

### Beispiel 13:

### Dekantieren und Abtrennen in erhöhter Reinheit mit Lösungsmittelwechsel

9.8g HDPE, 12.2g Polypropylen und 10,1 g PVC werden in p-Xylol bei 140°C in einem unter Normaldruck betriebenem Glasgefäß in Lösung gebracht. Es bilden sich zwei flüssige Phasen. Die schwere Phase enthält PVC in angereicherter Form und wird durch Dekantieren mit nachfolgendem Eindampfen gewonnen. Die obere, die beiden Polyolefine enthaltende Phase, wird ebenfalls gewonnen und eingedampft. Der erhaltene Feststoff wird in einen Edelstahlautoklaven mit Saphir-Sichtfenstern eingefüllt und mit 69,2g n-Pentan versetzt. Die Mischung wird auf 152,8°C aufgeheizt. Dabei bilden sich zwei flüssige Phasen. Über ein eintauchendes Edelstahlrohr wird die obere flüssige Phase vollständig abgezogen. Sie enthält Polypropylen in angereicherter Form. Nach Erwärmung auf 197.8°C wird die schwere der beiden entstehenden flüssigen Phasen über ein zweites eintauchendes Edelstahlrohr abgezogen und getrocknet. Das Produkt enthält HDPE in einer Reinheit von > 82 Massenprozent.

### Literatur

[1] B. Bungert, G. Sadowski, W. Arlt. Fluid Phase Equilibria 139 (1997) 349-359
[2] S. Krause, J. Macromol. Sci.-Revs. Macromol. Chem., C7(2), (1972) 251-314
[3] E.B.Nauman; WO91/03515
[4] W.Arlt. A.Lawisch, Deutsche Patentanmeldung, Az. 197 14063.7-41
[5] J. Gmehling, B. Kolbe: Thermodynamik. 2. Auflage. Weinheim 1992

## Patentansprüche

1. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel mindestens teilweise lösen,
b) die Mischungen in der Schmelze nicht vollständig mischbar sind.
c) die oben genannten Mischungen in einem Lösungsmittel oder Lösungsmittelgemisch derart gelöst werden, daß die Lösung 1-50Ma% Gesamtpolymer, bevorzugt 5-25Ma% Gesamtpolymer enthalten und mindestens zwei flüssige Phasen entstehen.
d) das Lösungsmittel oder Lösungsmittelgemisch einen Normalsiedepunkt zwischen 30°C und 250°C aufweist,
e) durch Dekantieren der flüssigen Phasen homogene Fraktionen entstehen, in denen jeweils ein Polymer oder eine Gruppe chemisch ähnlicher Polymere (Ziel-Polymer) in erhöhter Konzentration vorliegt oder vorliegen,
f) die homogenen Fraktionen Drücken und Temperaturen ausgesetzt werden, bei denen das reine Ziel-Polymer mit dem Lösungsmittel zwei flüssige Phasen bildet, so daß sich die Fraktionen auftrennen in mindestens zwei Phasen, von denen die erste eine flüssige, polymerreiche Phase ist, welche das Ziel-Polymer in weiter erhöhter Reinheit enthält, und die zweite eine flüssige, polymerarme Phase ist.
g) die polymerreiche Phase abgetrennt und das Ziel-Polymer in weiter erhöhter Reinheit gewonnen wird.

2. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel mindestens teilweise lösen.
b) die Mischungen in der Schmelze nicht vollständig mischbar sind,
c) die oben genannten Mischungen in einem Lösungsmittel oder Lösungsmittelgemisch derart gelöst werden, daß die Lösung 1-50Ma% Gesamtpolymer, bevorzugt 5-25Ma% Gesamtpolymer enthalten und mindestens zwei flüssige Phasen entstehen.
d) das Lösungsmittel oder Lösungsmittelgemisch einen Normalsiedepunkt zwischen 30°C und 250°C aufweist,
e) durch Dekantieren der flüssigen Phasen homogene Fraktionen entstehen, in denen jeweils ein Polymer oder eine Gruppe chemisch ähnlicher Polymere (Ziel-Polymer) in erhöhter Konzentration vorliegt oder vorliegen,
f) eine oder mehrere Fraktionen mit einem komprimierten Gas oder Gasgemisch versetzt werden mit dem Ziel, zwei oder mehr flüssige Phasen zu erzeugen, so daß sich die Fraktionen auftrennen in mindestens zwei Phasen, von denen die erste eine flüssige, polymerreiche Phase ist, welche das Ziel-Polymer in weiter erhöhter Reinheit enthält und die zweite eine flüssige, polymerarme Phase ist,
g) das Gas eine Substanz oder ein Substanzgemisch ist, welche oder welches bei 1 bar absolut und 25°C gasförmig vorliegt.

3. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel mindestens teilweise lösen,
b) die Mischungen in der Schmelze nicht vollständig mischbar sind,
c) die oben genannten Mischungen in einem Gemisch aus mindestens einem Lösungsmittel und mindestens einem Gas derart gelöst werden, daß die Lösung 1-50Ma% Gesamtpolymer, bevorzugt 5-25Ma% Gesamtpolymer enthalten und mindestens zwei flüssige Phasen entstehen,
d) das Lösungsmittel oder Lösungsmittelgemisch einen Normalsiedepunkt zwischen 30°C und 250°C aufweist,
e) durch Dekantieren der flüssigen Phasen homogene Fraktionen entstehen, in denen ein Polymer oder eine Gruppe chemisch ähnlicher Polymere (Ziel-Polymer), in erhöhter Konzentration vorliegt oder vorliegen,
f) eine oder mehrere Fraktionen mit weiterem komprimierten Gas oder Gasgemisch versetzt werden,
g) das Gas eine Substanz oder ein Substanzgemisch ist, welche oder welches bei 1 bar absolut und 25°C gasförmig vorliegt,
h) die nach Merkmal 3f erhaltenen Fraktionen Drücken und Temperaturen ausgesetzt werden, bei denen das reine Ziel-Polymer mit dem Lösungsmittel zwei flüssige Phasen bildet, so daß sich die Fraktionen auftrennen in mindestens zwei Phasen, von denen die erste eine flüssige, polymerreiche Phase ist, welche das Ziel-Polymer in weiter erhöhter Reinheit enthält und die zweite eine flüssige, polymerarme Phase ist,
i) die polymerreiche Phase abgetrennt und das Ziel-Polymer weiter erhöhter Reinheit gewonnen wird.

4. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel lösen,
b) die Mischungen in der Schmelze nicht vollständig mischbar sind.
c) die oben genannten Mischungen in einem Lösungsmittel oder Lösungsmittelgemisch derart gelöst werden, daß die homogene Lösung 1-50Ma% Gesamtpolymer, bevorzugt 5-25Ma% Gesamtpolymer enthält.
d) das Lösungsmittel oder Lösungsmittelgemisch einen Normalsiedepunkt zwischen 30°C und 250°C aufweist,
e) die Lösung steigenden Temperaturen ausgesetzt wird, so daß für die in der Lösung vorhandenen Polymere nacheinander folgende Schritte durchlaufen werden
ea) die Temperatur, oberhalb derer das jeweilige Polymer mit dem reinen Lösungsmittel zwei flüssige Phasen bildet, wird überschritten. so daß die Lösung sich auftrennt in mindestens zwei Phasen, von denen die erste eine flüssige, polymerreiche Phase ist, welche das jeweilige Polymer angereichert (Ziel-Polymer) enthält, und von denen die zweite eine flüssige, am jeweiligen Polymer arme Phase ist,
eb) die polymerreiche Phase abgetrennt und das Ziel- Polymer in erhöhter Reinheit gewonnen wird,
ec) die polymerarme Phase so lange den Schritten nach den Merkmalen 4ea bis 4eb unterworfen wird, bis alle gewünschten Polymere abgetrennt sind.

5. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel lösen,
b) die Mischungen in der Schmelze nicht vollständig mischbar sind.
c) die oben genannten Mischungen in einem Lösungsmittel oder Lösungsmittelgemisch derart gelöst werden, daß die homogene Lösung 1-50Ma% Gesamtpolymer, bevorzugt 5-25Ma% Gesamtpolymer enthält.
d) das Lösungsmittel oder Lösungsmittelgemisch einen Normalsiedepunkt zwischen 30°C und 250°C aufweist.
e) die Lösung fallenden Temperaturen ausgesetzt wird, so daß für die in der Lösung vorhandenen Polymere nacheinander folgende Schritte durchlaufen werden
ea) die Temperatur, unterhalb derer das jeweilige Polymer mit dem reinen Lösungsmittel zwei flüssige Phasen bildet, wird unterschritten, so daß die Lösung sich auftrennt in mindestens zwei Phasen, von denen die erste eine flüssige, polymerreiche Phase ist, welche das jeweilige Polymer angereichert (Ziel-Polymer) enthält. und von denen die zweite eine flüssige, am jeweiligen Polymer arme Phase ist,
eb) die polymerreiche Phase abgetrennt und das Ziel- Polymer in erhöhter Reinheit gewonnen wird,
ec) die polymerarme Phase so lange den Schritten nach den Merkmalen 5ea bis 5eb unterworfen wird, bis alle gewünschten Polymere abgetrennt sind.

6. Verfahren zur Trennung von Mischungen technischer oder biologischer Polymere dadurch charakterisiert, daß
a) es sich bei den Polymeren um technische oder biologische Makromoleküle mit einer zahlenmittleren Molmasse von größer 1000 g/mol und kleiner 1000 kg/mol handelt und die sich in mindestens einem geeigneten Lösungsmittel lösen,
b) die Mischungen in der Schmelze nicht vollständig mischbar sind,
c) die oben genannten Mischungen in einem Lösungsmittel oder Lösungsmittelgemisch derart gelöst werden, daß die homogene Lösung 1-50Ma% Gesamtpolymer, bevorzugt 5-25Ma% Gesamtpolymer enthält,
d) das Lösungsmittel oder Lösungsmittelgemisch einen Normalsiedepunkt zwischen 30°C und 250°C aufweist,
e) die Lösung mit konstanten Anteilen eines komprimierten Gases oder Gasgemisches (Gasgehalt) steigenden Temperaturen ausgesetzt oder bei konstanter Temperatur mit steigenden Anteilen eines komprimierten Gases oder Gasgemisches (Gasgehalt) versetzt wird, so daß für die in der Lösung vorhandenen Polymere nacheinander folgende Schritte durchlaufen werden
ea) die Temperatur oder der Gasgehalt, oberhalb derer das jeweilige Polymer mit dem Gemisch aus reinem Lösungsmittel und Gas oder Gasgemisch zwei flüssige Phasen bildet, wird überschritten, so daß die Lösung sich auftrennt in mindestens zwei Phasen, von denen die erste eine flüssige, polymerreiche Phase ist, welche das jeweilige Polymer angereichert (Ziel-Polymer) enthält, und von denen die zweite eine flüssige, am jeweiligen Polymer arme Phase ist,
eb) die polymerreiche Phase abgetrennt und das Ziel- Polymer in erhöhter Reinheit gewonnen wird,
ec) die polymerarme Phase so lange den Schritten nach den Merkmalen 6ea bis 6eb unterworfen wird, bis alle gewünschten Polymere abgetrennt sind.
f) das Gas eine Substanz oder ein Substanzgemisch ist. welche oder welches bei 1 bar absolut und 25°C gasförmig vorliegt.

7. Verfahren nach mindestens einem der Ansprüche 1 bis 6, **dadurch gekennzeichnet, daß** es sich bei den zu trennenden Polymeren um Copolymere unterschiedlichen Comonomer-Anteils handelt.

8. Verfahren nach mindestens einem der vorangehenden Ansprüche, **dadurch gekennzeichnet. daß** der Kurzkettenanteil der Molmassenverteilung des angereicherten Polymers erhöhter Reinheit in der Lösungsmittel-reichen Phase angereichert und damit in der Polymer-reichen Phase abgereichert wird.

9. Verfahren nach einem der Ansprüche 1 bis 3, **dadurch gekennzeichnet, daß** nach der ersten Dekantierung die homogenen Fraktionen. in denen jeweils ein Polymer oder eine Gruppe chemisch ähnlicher Polymere vorliegen, nach Trocknung vom zuerst vorhandenen Lösungsmittel oder ohne weitere Bearbeitung in einem anderen Lösungsmittel oder Lösungsmittelgemisch aufgelöst werden.

10. Verfahren nach einem der Ansprüche 2, 3, und 6, **dadurch gekennzeichnet, daß** die Gasmenge und die Temperatur so ausgewählt werden, daß es zu einer Absenkung der Zeit. die nötig, ist. bis sich 99Ma% der Substanzen in Phasen abgesetzt haben, auf unter 20 Minuten kommt.

11. Verfahren nach einem der Ansprüche 1 bis 10. **dadurch gekennzeichnet, daß** die Polymere Thermoplaste oder deren Mischungen sind.

12. Verfahren nach einem der Ansprüche 1 bis 10. **dadurch gekennzeichnet. daß** die Polymere Polystyrol, Polyvinylchlorid, Polyolefine oder deren Mischungen sind.

13. Verfahren nach einem der Ansprüche 1 bis 12. **dadurch gekennzeichnet. daß** es sich bei dem Lösungsmittel um aliphatische. aromatische oder cyclische, gesättigte oder ungesättigte Kohlenwasserstoffe. Alkohole, Carboxylsäuren. Amine, Ester, Ketone, Aledhyde, Ether, Wasser, Tetrahydrofuran. Dimethylformamid. Dimethylsulfoxid, N-Methylpyrrolidon. N-Methylcaprolactam oder deren Mischungen handelt.

14. Verfahren nach einem der Ansprüche 2, 3, und 6, **dadurch gekennzeichnet. daß** es sich bei dem verwendeten Gas um einen gesättigten oder ungesättigten Kohlenwasserstoff, Stickstoff. Stickoxide, Kohlendioxid, halogenierte Kohlenwasserstoffe, Ammoniak. Edelgase oder um deren Mischungen handelt.

15. Verfahren nach einem der Ansprüche 1 - 14, **dadurch gekennzeichnet, daß** es zur Wiederaufarbeitung von gebrauchten Kunststoffen dient.

## Claims

1. Method of separating mixtures of industrial or biological polymers, **characterised in that**
a) the polymers are industrial or biological macromolecules having a number average molecular weight of more than 1000 g/mol and less than 1000 kg/mol and which are at least partly soluble in at least one suitable solvent,
b) in the melt, the mixtures are not completely miscible,
c) the afore-mentioned mixtures are so dissolved in a solvent or solvent mixture that the solution contains 1 - 50 % total polymer by weight, preferably 5 - 25 % total polymer by weight, and at least two liquid phases are formed,
d) the solvent or solvent mixture has a normal boiling point between 30°C and 250°C,
e) as a result of decanting the liquid phases, homogenous fractions are formed in which, in each case, one polymer or a group of chemically similar polymers (target polymer) is or are present in increased concentration,
f) the homogenous fractions are subjected to pressures and temperatures at which the pure target polymer and the solvent form two liquid phases so that the fractions separate out into at least two phases, of which the first is a liquid, high-polymer-content phase comprising the target polymer in further increased purity and the second is a liquid, low-polymer-content phase,
g) the high-polymer-content phase is separated off and the target polymer is obtained in further increased purity.

2. Method of separating mixtures of industrial or biological polymers, **characterised in that**
a) the polymers are industrial or biological macromolecules having a number average molecular weight of more than 1000 g/mol and less than 1000 kg/mol and which are at least partly soluble in at least one suitable solvent,
b) in the melt, the mixtures are not completely miscible,
c) the afore-mentioned mixtures are so dissolved in a solvent or solvent mixture that the solution contains 1 - 50 % total polymer by weight, preferably 5 - 25 % total polymer by weight, and at least two liquid phases are formed,
d) the solvent or solvent mixture has a normal boiling point between 30°C and 250°C,
e) as a result of decanting the liquid phases, homogenous fractions are formed in which, in each case, one polymer or a group of chemically similar polymers (target polymer) is or are present in increased concentration,
f) to one or more fractions there is added a compressed gas or gas mixture with the aim of producing two or more liquid phases so that the fractions separate out into at least two phases, of which the first is a liquid, high-polymer-content phase comprising the target polymer in further increased purity and the second is a liquid, low-polymer-content phase,
g) the gas is a substance or substance mixture which, at 1 bar absolute and 25°C, is in gaseous form.

3. Method of separating mixtures of industrial or biological polymers, **characterised in that**
a) the polymers are industrial or biological macromolecules having a number average molecular weight of more than 1000g/mol and less than 1000 kg/mol and which are at least partly soluble in at least one suitable solvent,
b) in the melt, the mixtures are not completely miscible,
c) the afore-mentioned mixtures are so dissolved in a mixture of at least one solvent and at least one gas that the solution contains 1 - 50 % total polymer by weight, preferably 5 - 25 % total polymer by weight, and at least two liquid phases are formed,
d) the solvent or solvent mixture has a normal boiling point between 30°C and 250°C,
e) as a result of decanting the liquid phases, homogenous fractions are formed in which one polymer or a group of chemically similar polymers (target polymer) is or are present in increased concentration,
f) to one or more fractions there is added further compressed gas or gas mixture,
g) the gas is a substance or substance mixture which, at 1 bar absolute and 25°C, is in gaseous form,
h) the fractions obtained according to feature 3f are subjected to pressures and temperatures at which the pure target polymer and the solvent form two liquid phases so that the fractions separate out into at least two phases, of which the first is a liquid, high-polymer-content phase comprising the target polymer in further increased purity and the second is a liquid, low-polymer-content phase,
i) the high-polymer-content phase is separated off and the target polymer of further increased purity is obtained.

4. Method of separating mixtures of industrial or biological polymers, **characterised in that**
a) the polymers are industrial or biological macromolecules having a number average molecular weight of more than 1000 g/mol and less than 1000 kg/mol and which are soluble in at least one suitable solvent,
b) in the melt, the mixtures are not completely miscible,
c) the afore-mentioned mixtures are so dissolved in a solvent or solvent mixture that the homogenous solution contains 1 - 50 % total polymer by weight, preferably 5 - 25% total polymer by weight,
d) the solvent or solvent mixture has a normal boiling point between 30°C and 250°C,
e) the solution is subjected to increasing temperatures so that, for the polymers present in the solution, the following steps are performed in succession
ea) the temperature above which the polymer in question and the pure solvent form two liquid phases is exceeded so that the solution separates out into at least two phases, of which the first is a liquid, high-polymer-content phase comprising the polymer is question in increased concentration (target polymer) and of which the second is a liquid phase having a low content of the polymer in question,
eb) the high-polymer-content phase is separated off and the target polymer is obtained in increased purity,
ec) the low-polymer-content phase is subjected to the steps according to features 4ea to 4eb until all the desired polymers have been separated off.

5. Method of separating mixtures of industrial or biological polymers, **characterised in that**
a) the polymers are industrial or biological macromolecules having a number average molecular weight of more than 1000 g/mol and less than 1000 kg/mol and which are soluble in at least one suitable solvent,
b) in the melt, the mixtures are not completely miscible,
c) the afore-mentioned mixtures are so dissolved in a solvent or solvent mixture that the homogenous solution contains 1 - 50 % total polymer by weight, preferably 5 - 25 % total polymer by weight,
d) the solvent or solvent mixture has a normal boiling point between 30°C and 250°C,
e) the solution is subjected to decreasing temperatures so that, for the polymers present in the solution, the following steps are performed in succession
ea) the temperature is lowered to below the temperature at which the polymer in question and the pure solvent form two liquid phases so that the solution separates out into at least two phases, of which the first is a liquid, high-polymer-content phase comprising the polymer is question in increased concentration (target polymer) and of which the second is a liquid phase having a low content of the polymer in question,
eb) the high-polymer-content phase is separated off and the target polymer is obtained in increased purity,
ec) the low-polymer-content phase is subjected to the steps according to features 5ea to 5eb until all the desired polymers have been separated off.

6. Method of separating mixtures of industrial or biological polymers, **characterised in that**
a) the polymers are industrial or biological macromolecules having a number average molecular weight of more than 1000 g/mol and less than 1000 kg/mol and which are soluble in at least one suitable solvent,
b) in the melt, the mixtures are not completely miscible,
c) the afore-mentioned mixtures are so dissolved in a solvent or solvent mixture that the homogenous solution contains 1 - 50 % total polymer by weight, preferably 5 - 25 % total polymer by weight,
d) the solvent or solvent mixture has a normal boiling point between 30°C and 250°C,
e) the solution containing constant amounts of a compressed gas or gas mixture (gas content) is subjected to increasing temperatures, or to the solution at constant temperature there are added increasing amounts of a compressed gas or gas mixture (gas content) so that, for the polymers present in the solution, the following steps are performed in succession
ea) the temperature or gas content above which the polymer in question and the mixture of pure solvent and gas or gas mixture form two liquid phases is exceeded so that the solution separates out into at least two phases, of which the first is a liquid, high-polymer-content phase comprising the polymer is question in increased concentration (target polymer) and of which the second is a liquid phase having a low content of the polymer in question, eb) the high-polymer-content phase is separated off and the target polymer is obtained in increased purity,
ec) the low-polymer-content phase is subjected to the steps according to features 6ea to 6eb until all the desired polymers have been separated off,
f)-the gas is a substance or substance mixture which, at 1 bar absolute and 25°C, is in gaseous form.

7. Method according to at least one of claims 1 to 6, **characterised in that** the polymers to be separated are copolymers of differing comonomer contents.

8. Method according to at least one of the preceding claims, **characterised in that** the short-chain portion of the molecular weight distribution of the increased-concentration polymer of increased purity is of increased concentration in the high-solvent-content phase and consequently is of decreased concentration in the high-polymer-content phase.

9. Method according to one of claims 1 to 3, **characterised in that**, after the first decanting, the homogenous fractions in which, in each case, one polymer or a group of chemically similar polymers are present are, after drying of the solvent first present or without further processing, dissolved in another solvent or solvent mixture.

10. Method according to one of claims 2, 3 and 6, **characterised in that** the amount of gas and the temperature are so selected that there is a resulting reduction, to less than 20 minutes, in the time required for 99 % of the substances by weight to settle into phases.

11. Method according to one of claims 1 to 10, **characterised in that** the polymers are thermoplastics or mixtures thereof.

12. Method according to one of claims 1 to 10, **characterised in that** the polymers are polystyrene, polyvinyl chloride, polyolefins or mixtures thereof.

13. Method according to one of claims 1 to 12, **characterised in that** the solvent is an aliphatic, aromatic or cyclic, saturated or unsaturated hydrocarbon, an alcohol, a carboxylic acid, an amine, an ester, a ketone, an aldehyde, an ether, water, tetrahydrofuran, dimethylformamide, dimethyl sulphoxide, N-methylpyrrolidone, N-methylcaprolactam or a mixture thereof.

14. Method according to one of claims 2, 3 and 6, **characterised in that** the gas used is a saturated or unsaturated hydrocarbon, nitrogen, a nitrogen oxide, carbon dioxide, a halogenated hydrocarbon, ammonia, a noble gas or a mixture thereof.

15. Method according to one of claims 1 - 14, **characterised in that** it serves for the reprocessing of used plastics.

## Revendications

1. Procédé de séparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50 % en masse de polymère total, de préférence de 5 à 25 % en masse de polymère total et qu'il se forme au moins deux phases liquides,
d) le solvant, ou le mélange de solvants, présente un point d'ébullition normal entre 30°C et 250°C,
e) il se forme par décantation des phases liquides des fractions homogènes, dans lesquelles se trouvent à chaque fois un polymère ou un groupe de polymères chimiquement semblables (polymère cible) en concentration prédominante,
f) les fractions homogènes sont exposées à des pressions et des températures auxquelles le polymère cible pur forme avec le solvant deux phases liquides, de sorte que les fractions se séparent en au moins deux phases, dont la première est une phase liquide riche en polymère, qui contient le polymère cible avec une pureté encore plus grande, et la deuxième est une phase liquide pauvre en polymère,
g) la phase riche en polymère est séparée et le polymère cible est obtenu avec une pureté augmentée.

2. Procédé de séparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50% en masse de polymère total, de préférence de 5 à 25% en masse de polymère total et qu'il se forme au moins deux phases liquides,
d) le solvant, ou le mélange de solvants, présente un point d'ébullition normal entre 30°C et 250°C,
e) il se forme par décantation des phases liquides des fractions homogènes, dans lesquelles se trouvent à chaque fois un polymère ou un groupe de polymères chimiquement semblables (polymère cible) en concentration prédominante,
f) une ou plusieurs fractions sont mélangées à un gaz ou un mélange de gaz comprimé, dans le but de produire deux phases liquides ou plus, de sorte que les fractions se séparent en au moins deux phases, dont la première est une phase liquide riche en polymère, qui contient le polymère cible avec une pureté augmentée et la deuxième est une phase liquide pauvre en polymère,
g) le gaz est une substance ou un mélange de substances qui se présente sous forme gazeuse sous 1 bar absolu et à 25°C.

3. Procédé de préparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50 % en masse de polymère total, de préférence de 5 à 25 % en masse de polymère total et qu'il se forme au moins deux phases liquides,
d) le solvant, ou le mélange de solvants, présente un point d'ébullition normal entre 30°C et 250°C,
e) il se forme, par décantation des phases liquides, des fractions homogènes, dans lesquelles se trouvent à chaque fois un polymère ou un groupe de polymères chimiquement semblables (polymère cible) en concentration prédominante,
f) une ou plusieurs fractions sont mélangées à un gaz ou un mélange de gaz encore comprimé,
g) le gaz est une substance ou un mélange de substances qui se présente sous forme gazeuse sous 1 bar absolu et à 25°C.
h) les fractions obtenues selon la caractéristique 3f, sont exposées à des pressions et des températures auxquelles le polymère cible pur forme avec le solvant deux phases liquides, de sorte que les fractions se séparent en au moins deux phases, dont la première est une phase liquide riche en polymère, qui contient le polymère cible avec une pureté encore plus grande, et la deuxième est une phase liquide pauvre en polymère,
i) la phase riche en polymère est séparée et le polymère cible est obtenu avec une pureté augmentée.

4. Procédé de séparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50% en masse de polymère total, de préférence de 5 à 25 % en masse de polymère total et qu'il se forme au moins deux phases liquides,
d) le solvant, ou le mélange de solvants, présente un point d'ébullition normal entre 30°C et 250°C,
e) la solution est exposée à des températures croissantes, de sorte que les polymères présents dans la solution traversent successivement les étapes suivantes :
ea) la température au-dessus de laquelle un des polymères forme avec le solvant pur deux phases liquides est dépassée, de sorte que la solution se sépare en au moins deux phases, dont la première est une phase liquide riche en polymère, qui contient ledit polymère enrichi (polymère cible), et dont la deuxième est une phase liquide pauvre en dit polymère,
eb) la phase riche en polymère est séparée et le polymère cible est obtenu avec une pureté augmentée,
ec) la phase pauvre en polymère est soumise aux étapes selon les caractéristiques 4ea à 4eb jusqu'à ce que tous les polymères souhaités soient séparés.

5. Procédé de séparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50% en masse du polymère total, de préférence de 5 à 25% en masse du polymère total,
d) le solvant, ou le mélange de solvants, présente un point d'ébullition normal entre 30°C et 250°C,
e) la solution est exposée à des températures décroissantes, de sorte que les polymères présents dans la solution traversent successivement les étapes suivantes :
ea) la température au-dessous de laquelle un des polymères forme avec le solvant pur deux phases liquides est dépassée, de sorte que la solution se sépare en au moins deux phases, dont la première est une phase liquide riche en polymère, qui contient ledit polymère enrichi (polymère cible), et dont la deuxième est une phase liquide pauvre en dit polymère,
eb) la phase riche en polymère est séparée et le polymère cible est obtenu avec une pureté augmentée,
ec) la phase pauvre en polymère est soumise aux étapes selon les caractéristiques 5ea à 5eb jusqu'à ce que tous les polymères souhaités soient séparés.

6. Procédé de séparation de mélanges de polymères techniques ou biologiques, **caractérisé en ce que** :
a) les polymères sont des macromolécules techniques ou biologiques qui présentent une masse molaire moyenne en nombre de plus de 1000 g/mole et de moins de 1000 kg/mole, et qui se dissolvent au moins partiellement dans au moins un solvant approprié,
b) les mélanges ne sont pas totalement miscibles dans la masse fondue,
c) les mélanges précités sont dissous dans un solvant ou un mélange de solvants, de manière à ce que la solution contienne de 1 à 50% en masse du polymère total, de préférence de 5 à 25 % en masse du polymère total,
d) le solvant, ou le mélange de solvants, présente un point d'ébullition normal entre 30°C et 250°C,
e) la solution est exposée à des températures croissantes avec des fractions constantes de gaz ou de mélange de gaz comprimé (teneur en gas) ou, à température constante, mélangé à des fractions croissantes d'un gaz ou d'un mélange de gaz comprimé (teneur en gaz), de sorte que les polymères présents dans la solution traversent successivement les étapes suivantes :
ea) la température ou la teneur en gaz au-dessous de laquelle un des polymères forme avec le mélange de solvant pur et de gaz ou de mélange de gaz deux phases liquides est dépassée, de sorte que la solution se sépare en au moins deux phases, dont la première est une phase liquide riche en polymère, qui contient ledit polymère enrichi (polymère cible), et dont la deuxième est une phase liquide pauvre en dit polymère,
eb) la phase riche en polymère est séparée et le polymère cible est obtenu avec une pureté augmentée,
ec) la phase pauvre en polymère est soumise aux étapes selon les caractéristiques 6ea à 6eb jusqu'à ce que tous les polymères souhaités soient séparés.
f) le gaz est une substance ou un mélange de substances qui se présente sous forme gazeuse sous 1 bar absolu et à 25°C.

7. Procédé selon au moins l'une quelconque des revendications 1 à 6, **caractérisé en ce que** les polymères à séparer sont des copolymères présentant des fractions différentes de monomères.

8. Procédé selon au moins l'une quelconque des revendications qui précèdent, **caractérisé en ce que** la fraction à chaîne courte de la distribution de masse molaire du polymère enrichi de grande pureté est concentrée dans la phase riche en solvant et est dès lors appauvrie dans la phase riche en polymère.

9. Procédé selon l'une quelconque des revendications 1 à 3, **caractérisé en ce qu'**après la première décantation, les fractions homogènes, dans lesquelles se trouvent à chaque fois un polymère ou un groupe de polymères chimiquement semblables , et après séchage du premier solvant présent, sont dissoutes dans un autre solvant ou mélange de solvants sans autre traitement.

10. Procédé selon l'une quelconque des revendications 2, 3 et 6, **caractérisé en ce que** les fractions de gaz et la température sont choisies de manière à réduire à moins de 20 minutes le temps nécessaire pour que 99% en masse des substances soient déposées dans les phases.

11. Procédé selon l'une quelconque des revendications 1 à 10, **caractérisé en ce que** les polymères sont des thermoplastiques ou leurs mélanges.

12. Procédé selon l'une quelconque des revendications 1 à 10, **caractérisé en ce que** les polymères sont du polystyrène, du chlorure de polyvinyle, des polyoléfines, ou leurs mélanges.

13. Procédé selon l'une quelconque des revendications 1 à 12, **caractérisé en ce que** les solvants sont des hydrocarbures aliphatiques, aromatiques ou cycliques, saturés ou insaturés, des alcools, des acides carboxyliques, des amines, des esters, des cétones, des aldéhydes, des éthers, de l'eau, du tétrahydrofuranne, du diméthylformamide, du diméthylsulfoxyde, de la N-méthylpyrrolidone, du N-méthylcaprolactame, ou leurs mélanges.

14. Procédé selon l'une quelconque des revendications 2,3 et 6, **caractérisé en ce que** le gaz utilisé est un hydrocarbure saturé ou insaturé, de l'azote, des oxydes d'azote, du dioxyde de carbone, des hydrocarbures halogénés, de l'ammoniac, des gaz rares, ou leurs mélanges.

15. Procédé selon l'une quelconque des revendications 1 à 14, **caractérisé en ce qu'**il est destiné au retraitement de plastiques usagés.
